# EUROPÄISCHE PATENTSCHRIFT

(11) **EP 4 186 462 B1**
(45) Veröffentlichungstag und Bekanntmachung des Hinweises auf die Patenterteilung: **06.08.2025**
(21) Anmeldenummer: 21210515.9
(22) Anmeldetag: 25.11.2021
(51) Int. Cl.: A61C 8/00, A61C 13/00, B33Y 40/00, B33Y 80/00, B29C 64/00

(54) **VERFAHREN ZUM HERSTELLEN EINER DENTALRESTAURATION UND DENTALRESTAURATION**
METHOD FOR PRODUCING A DENTAL OBJECT AND DENTAL OBJECT
PROCÉDÉ DE FABRICATION D'UN OBJET DENTAIRE ET OBJET DENTAIRE

(43) Veröffentlichungstag der Anmeldung: 31.05.2023
(73) Patentinhaber: Ivoclar Vivadent AG, 9494 Schaan (LI)
(72) Erfinder: EBERT, Jörg, 9494 Schaan (LI); SCHERER, Pascal, 9494 Schaan (LI); SCHÖCH, Alexander, 9494 Schaan (LI); ASTER, Marius, 39025 Naturno (IT)
(74) Vertreter: Baldus, Oliver

(56) Entgegenhaltungen:
- WO-A1-2021/046615
- US-A1- 2015 282 946
- US-A1- 2017 128 174
- US-A1- 2018 228 613
- US-A1- 2019 263 070
- US-A1- 2020 390 528
- US-A1- 2021 228 316

## Beschreibung

Die vorliegende Erfindung betrifft ein Verfahren zum Herstellen eines Dentalobjekts und ein Dentalobjekt.

Bei additiven Fertigungsverfahren sind oft sogenannte Stützstrukturen für eine erfolgreiche Fertigung des Dentalobjektes erforderlich. Diese Stützstrukturen werden während dem Fertigungsprozess von der Maschine, wie beispielsweise von einem FDM- (Fused Deposition Modeling), SLA- (Stereolithography Apparatus) oder SLS- (Selective Laser Sintering) Drucker, mit gefertigt. Durch die schichtweise Fertigung bei diesen Verfahren werden bestimmte Bereiche des Werkstückes durch solche zusätzlichen Stützstrukturen unterstützt.

Als Stützstrukturen werden oft sogenannte Pillars (Deutsch: Pfeiler) verwendet, die die das zu fertigende Dentalobjekt lokal unterstützen. Diese bieten jedoch wenig Stabilität. Daneben kommen auch Lattices (Deutsch: Gitter) zum Einsatz. Diese erfordern jedoch einen hohen Materialeinsatz.

Die Druckschrift US 2019/263070 A1 betrifft ein Verfahren zur Herstellung eines dreidimensionalen Objekts durch additive Fertigung auf einer Trägerplattform durch Stereolithografie.

Die Druckschrift US 2018/228613 A1 betrifft biokompatible Gitterstrukturen mit erhöhter Transparenz in einer gewünschten Richtung bei einer Röntgen-Bildgebung. Die Gitterstrukturen werden als Knochenimplantate verwendet und dienen zum Gewebewachstum.

Die Druckschrift WO 2021/046615 A1 betrifft einen 3D-Druck mit Keramikpartikeln und Verfahren zum Drucken von keramischen 3D-Objekten.

Die Druckschrift US 2015/282946 A1 betrifft ein Implantat zum Verschmelzen von Lumbalwirbeln mittels Herausnahme einer Bandscheibe und Ersatz dieser durch einen (Titan) Korb.

Die Druckschrift US 2021/228316 A1 betrifft die additive Herstellung von Zahnersatz, insbesondere von Zahnkappen (wie Kronen oder Teilkronen), unter Verwendung von Stützstrukturen.

Es ist die technische Aufgabe der vorliegenden Erfindung, ein Dentalobjekt bei der Herstellung mit einer Stützstruktur zu unterstützen, die einerseits eine hohe Stabilität bietet und sich andererseits mit einem geringen Materialeinsatz realisieren lässt.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch ein Verfahren zum Herstellen eines Dentalobjekts gelöst, mit den Schritten eines Erzeugens einer säulenförmigen Unterstützungsstruktur an dem Dentalobjekt; und eines Erzeugens einer Gitterstruktur zum Verstärken der Unterstützungsstruktur. Die Gitterstruktur kann dabei entweder aus zusätzlichen vertikalen und schrägen Streben zwischen oder an den Unterstützungsstrukturen oder mit schrägen Streben zwischen und an den Unterstützungsstrukturen erzeugt werden. Durch diese kombinierte Stützstruktur wird der technische Vorteil erreicht, dass diese eine hohe Stabilität aufweist und mit einem geringen Materialeinsatz gefertigt werden kann.

In einer erfindungsgemäßen Ausführungsform des Verfahrens wird die Gitterstruktur seitlich neben der Unterstützungsstruktur angeordnet. Dadurch wird beispielsweise der technische Vorteil erreicht, dass die säulenförmige Unterstützungsstruktur gezielt an einer Seite verstärkt werden kann und sich Materialeinsatz weiter verringert.

In einer weiteren technisch vorteilhaften Ausführungsform des Verfahrens wird die Gitterstruktur um die Unterstützungsstruktur herum angeordnet. Dadurch wird beispielsweise der technische Vorteil erreicht, dass die säulenförmige Unterstützungsstruktur von allen Seiten verstärkt wird.

In einer weiteren technisch vorteilhaften Ausführungsform des Verfahrens wird die Unterstützungsstruktur auf der Gitterstruktur angeordnet. Dadurch wird beispielsweise der technische Vorteil erreicht, dass ein Teil der säulenförmigen Unterstützungsstruktur durch die Gitterstruktur ersetzt werden kann und sich so die Stabilität verbessert.

In einer weiteren technisch vorteilhaften Ausführungsform des Verfahrens wird die Gitterstruktur durch zumindest eine Dreiecksstruktur, eine Viereckstruktur, eine Fünfeckstruktur und/oder eine Sechseckstruktur erzeugt. Dadurch wird beispielsweise der technische Vorteil erreicht, dass besonders stabile Gitterstrukturen verwendet werden.

In einer weiteren technisch vorteilhaften Ausführungsform des Verfahrens wird die Unterstützungsstruktur in die Gitterstruktur integriert. Dadurch wird beispielsweise der technische Vorteil erreicht, dass sich der Materialaufwand weiter verringert.

In einer weiteren technisch vorteilhaften Ausführungsform des Verfahrens die Unterstützungsstruktur zumindest teilweise durch die Gitterstruktur ersetzt. Dadurch wird beispielsweise ebenfalls der technische Vorteil erreicht, dass sich der Materialaufwand weiter verringert.

In einer weiteren technisch vorteilhaften Ausführungsform des Verfahrens wird die Gitterstruktur zwischen mehreren Unterstützungsstrukturen erzeugt, wie beispielsweise mittels Streben, die zwischen Unterstützungsstrukturen gebildet werden. Dadurch wird beispielsweise ebenfalls der technische Vorteil erreicht, dass eine hohe Stabilität der Gitterstruktur erreicht und der Materialaufwand verringert wird.

In einer weiteren technisch vorteilhaften Ausführungsform des Verfahrens werden vertikale Säulen der Gitterstruktur durch diagonale oder schräge Streben verbunden. Die Gitterstruktur kann eine Pyramidenform bilden. Dadurch wird beispielsweise ebenfalls der technische Vorteil erreicht, dass eine hohe Stabilität der Gitterstruktur erreicht wird.

In einer weiteren technisch vorteilhaften Ausführungsform des Verfahrens werden ein, zwei oder mehrere schräge Streben mit der Unterstützungsstruktur verbunden, um die Gitterstruktur zu erzeugen. Dadurch wird beispielsweise ebenfalls der technische Vorteil erreicht, dass eine hohe Stabilität der Gitterstruktur erreicht wird.

In einer weiteren technisch vorteilhaften Ausführungsform des Verfahrens wird eine schräge Strebe mit der Unterstützungsstruktur verbunden, um die Gitterstruktur zu erzeugen. Die Gitterstruktur kann die Unterstützungsstruktur teilweise ersetzen. Dadurch wird beispielsweise ebenfalls der technische Vorteil erreicht, dass eine hohe Stabilität der Gitterstruktur erreicht wird.

In einer weiteren technisch vorteilhaften Ausführungsform des Verfahrens werden das Dentalobjekt, die Unterstützungsstruktur und/oder die Gitterstruktur mittels eines 3D-Druckverfahrens hergestellt. Dadurch wird beispielsweise ebenfalls der technische Vorteil erreicht, dass sich die Dentalobjekt, die Unterstützungsstruktur und/oder die Gitterstruktur auf einfache und schnelle Weise herstellen lassen.

Gemäß einem zweiten Aspekt wird die technische Aufgabe durch ein Dentalobjekt gelöst, mit einer säulenförmigen Unterstützungsstruktur an dem Dentalobjekt; und einer Gitterstruktur zum Verstärken der Unterstützungsstruktur. Durch das Dentalobjekt werden die gleichen technischen Vorteile wie durch das Verfahren nach dem ersten Aspekt erreicht.

In einer erfindungsgemäßen Ausführungsform des Dentalobjekts ist die Gitterstruktur seitlich neben der Unterstützungsstruktur angeordnet. Dadurch wird beispielsweise ebenfalls der technische Vorteil erreicht, dass die säulenförmige Unterstützungsstruktur gezielt an einer Seite verstärkt werden kann und sich Materialeinsatz weiter verringert.

In einer weiteren technisch vorteilhaften Ausführungsform des Dentalobjekts ist die Gitterstruktur um die Unterstützungsstruktur herum angeordnet. Dadurch wird beispielsweise ebenfalls der technische Vorteil erreicht, dass die säulenförmige Unterstützungsstruktur von allen Seiten verstärkt wird.

In einer weiteren technisch vorteilhaften Ausführungsform des Dentalobjekts ist die Unterstützungsstruktur auf der Gitterstruktur angeordnet. Dadurch wird beispielsweise ebenfalls der technische Vorteil erreicht, dass ein Teil der säulenförmigen Unterstützungsstruktur durch die Gitterstruktur ersetzt werden kann und sich so die Stabilität verbessert.

In einer weiteren technisch vorteilhaften Ausführungsform des Dentalobjekts umfasst die Gitterstruktur zumindest eine Dreiecksstruktur, eine Viereckstruktur, eine Fünfeckstruktur und/oder eine Sechseckstruktur.

Gemäß einem dritten Aspekt wird die technische Aufgabe durch ein Computerprogramm gelöst, das Befehle umfasst, die bewirken, dass eine 3D-Druckvorrichtung die Verfahrensschritte nach dem ersten Aspekt ausführt. Durch das Computerprogramm werden die gleichen technischen Vorteile wie durch das Verfahren nach dem ersten Aspekt erreicht.

Ausführungsbeispiele der Erfindung sind in den Zeichnungen dargestellt und werden im Folgenden näher beschrieben.

Es zeigen:
- **Fig.** 1: eine schematische Ansicht eines Aufbaus eines Dentalobjekts mit und ohne säulenförmige Unterstützungsstruktur;
- **Fig.** 2: eine schematische Ansicht eines Aufbaus eines Dentalobjekts mit säulenförmiger Unterstützungsstruktur, die durch eine Gitterstruktur verstärkt ist;
- **Fig.** 3: eine weitere schematische Ansicht eines Aufbaus eines Dentalobjekts mit säulenförmiger Unterstützungsstruktur, die durch eine Gitterstruktur verstärkt ist;
- **Fig.** 4: eine weitere schematische Ansicht eines Aufbaus eines Dentalobjekts mit säulenförmiger Unterstützungsstruktur, die durch eine Gitterstruktur verstärkt ist;
- **Fig.** 5: eine weitere schematische Ansicht eines Aufbaus eines Dentalobjekts mit säulenförmiger Unterstützungsstruktur, die durch eine Gitterstruktur verstärkt ist;
- **Fig.** 6: eine weitere schematische Ansicht eines Aufbaus eines Dentalobjekts mit säulenförmiger Unterstützungsstruktur, die durch eine Gitterstruktur verstärkt ist;
- Fig. 7: eine weitere schematische Ansicht eines Aufbaus eines Dentalobjekts mit säulenförmiger Unterstützungsstruktur, die durch eine Gitterstruktur verstärkt ist; und
- Fig. 8: ein Blockdiagramm eines Verfahrens zum Herstellen des Dentalobjekts.

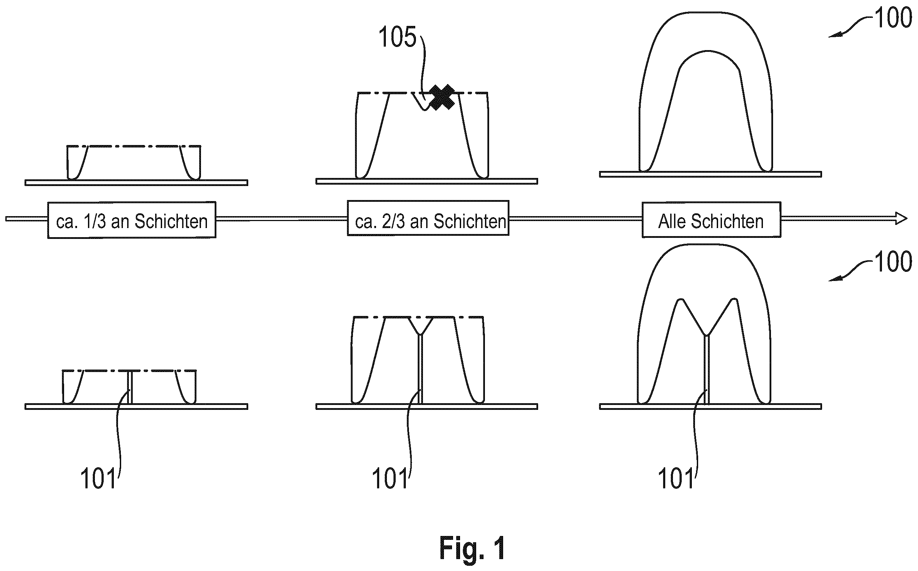

Fig. 1 zeigt eine schematische Ansicht von Zuständen während einem Fertigungsprozess eines Dentalobjekts 100 mit und ohne säulenförmige Unterstützungsstruktur 101.

Das Dentalobjekt 100 ist beispielsweise eine dentale Restauration, wie beispielsweise eine Krone, eine Brücke, ein Veneer, ein Abutment, ein Inlay oder ein Onlay.

Das Dentalobjekt 100 wird mit einem additiven Fertigungsverfahren schichtweise hergestellt, wie beispielsweise einem 3D-Druckverfahren. Auf der linken Seite sind ungefähr ein Drittel der Schichten vollendet, in der Mitte sind zwei Drittel der Schichten vollendet und auf der rechten Seite sind alle Schichten des Dentalobjekts 100 vollendet. Die Bauplatte fährt dabei von oben in eine Wanne mit Material. Für den schichtweisen Aufbau erfolgt eine Belichtung von unten durch Digital Light Processing (DLP). Eine Fertigung ohne Unterstützungsstrukturen 101 kann zu frei hängenden Geometrien 105 und Fehlern bei der Produktion des Dentalobjektes 100 führen (oben). Bei einem Fertigungsprozess mit Unterstützungsstrukturen 101 entstehen hingegen keine frei hängenden, fehlerhaften Geometrien 105 (unten). Eine Fertigung mit Unterstützungsstrukturen 101 ist oft erforderlich, um eine korrekte Geometrie des Dentalobjektes 100 zu erhalten. Außer der Gewichtskraft wirken, abhängig vom Fertigungsprozess, auch andere Kräfte wie beispielsweise eine Zugkraft und Scherkraft auf das Dentalobjekt 100 oder die Unterstützungsstrukturen 101.

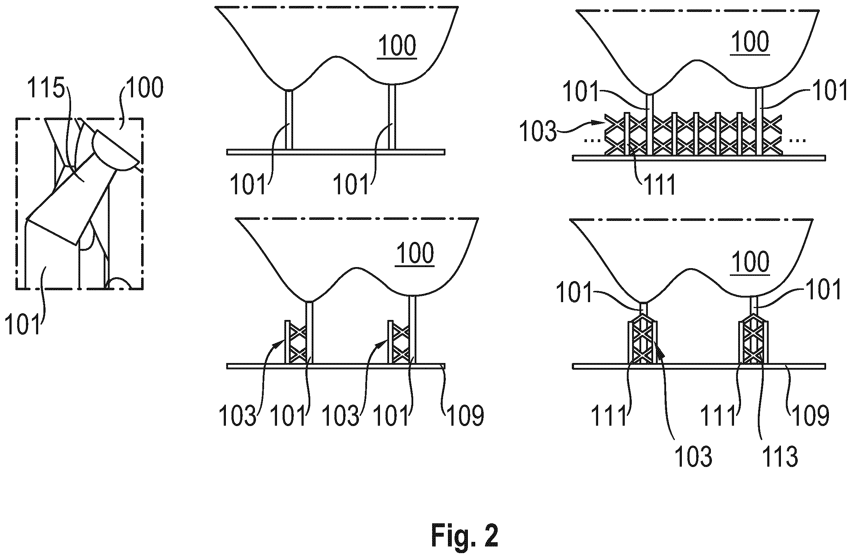

Fig. 2 zeigt eine schematische Ansicht eines Aufbaus eines Dentalobjekts 100 mit säulenförmiger Unterstützungsstruktur 101, die durch eine zusätzliche Gitterstruktur 103 verstärkt ist. Die Unterstützungsstrukturen 101 und/oder Gitterstrukturen 103 sind auf einer Bauplatte 109 angeordnet und erstrecken sich von der Bauplatte 109 zum Dentalobjekt 100 hin. Die Unterstützungsstrukturen 101 können sich brückenförmig zwischen dem Dentalobjekt 100 und einer Bauplatte 109 erstrecken. Die Unterstützungsstrukturen 101 weisen typischerweise eine Länge von 2 bis 100 mm und einen Durchmesser von 0.5 bis 3 mm auf.

Die zusätzliche Gitterstruktur 103 verbessert den Widerstand von Unterstützungsstrukturen 101 gegen Scherkräfte, ohne dass hierbei wesentlich mehr Material verbrauch wird. Diese Scherkräfte treten beispielsweise bei klassischen DLP-Prozessen (DLP - Digital Light Processing) mit Trennvorgang von einer Referenzebene auf. Die Gitterstrukturen 103 sind aus vertikalen Streben 111 gebildet, die durch diagonale oder schräge Streben 113 miteinander verbunden sind. Die vertikalen Streben 111 laufen parallel zu den säulenförmigen Unterstützungsstrukturen 101. Die vertikalen Streben 111 erstecken sich beispielsweise nicht zwischen der Bauplatte 109 und dem Dentalobjekt 100 oder die vertikalen Streben 111 weisen einen Abstand zu diesem auf. Die diagonalen oder schrägen Streben 113 stützen die vertikalen Streben 111 aneinander ab.

Der Durchmesser der säulenförmigen Unterstützungsstruktur 101 kann kleiner als, gleich zu oder größer als der Durchmesser der vertikalen Streben 111 sein. Die vertikalen Streben 111 können in einer Dreiecksstruktur, eine Viereckstruktur, eine Fünfeckstruktur und/oder eine Sechseckstruktur angeordnet sein.

Der Querschnitt der säulenförmigen Unterstützungsstruktur 101, der vertikalen oder diagonalen oder schräge Streben 111 oder 113 kann kreisförmig, quadratisch oder oval sein. Im Allgemeinen können auch andere Querschnittsformen verwendet werden. Die Unterstützungsstrukturen 101 können Unterstützungsköpfe 115 (Support Heads) an abgewinkelten Spitzen 115 aufweisen, die an dem Dentalobjekt 101 angreifen. Die Unterstützungsköpfe 115 dienen als Schnittstelle zwischen den Unterstützungsstrukturen 101 und dem Dentalobjekt 100.

Der Unterstützungskopf 115 ist der einzige Kontaktpunkt zwischen dem zu unterstützenden Punkt des Dentalobjekts 100 und der Unterstützungsstruktur 101. Die Schnittstelle sollte so klein wie möglich gewählt werden, ohne jedoch die Stabilität und Festigkeit der Verbindung zu beeinträchtigen. Idealerweise, ragt der Unterstützungskopf 115 unter einem senkrechten Winkel zur Oberfläche des Dentalobjektes 100 hin. Der Unterstützungskopf 115 umfasst drei Elemente, nämlich den Kopfkonus, die Kopfspitzenkugel oder -Halbkugel, und Kopfrückkugel. Die Größen dieser Elemente können durch einen Parametersatz festgelegt werden.

Die säulenförmigen Unterstützungsstrukturen 101 werden durch dynamisch generierte und lokal begrenzte Gitterstrukturen 103 verstärkt. Die Gitterstruktur 103 bewirkt eine Verbesserung der Stabilität der säulenförmigen oder pfeilerartigen Unterstützungsstruktur 101 (Engl.: Pillar). Im Gegensatz zu großflächigen Gitterstrukturen 103 (Engl.: Lattice) wird durch die Kombination von säulenförmiger Unterstützungsstruktur 101 mit einer zusätzlichen lokalen Gitterstruktur 103 weniger Materialverbrauch verursacht. Die Gitterstruktur 103 kann lediglich in einem vorgegebenen Bereich um die Unterstützungsstruktur 101 herum angeordnet sein. Gleichzeitig wird eine höhere Stabilität als lediglich mit säulenförmigen Unterstützungsstrukturen 101 erreicht.

Oben links ist ein Aufbau gezeigt, bei dem lediglich säulenförmige Unterstützungsstrukturen 101 ohne weitere Gitterstrukturen 103 verwendet werden. Oben rechts wird zusätzlich zu den säulenförmigen Unterstützungsstrukturen 101 eine großflächige Gitterstruktur 103 verwendet.

Unten links wird die säulenförmige Unterstützungsstruktur 101 gezielt seitlich durch eine seitliche Gitterstruktur 103 erweitert oder ergänzt. Unten rechts wird die säulenförmige Unterstützungsstruktur 101 teilweise durch die Gitterstruktur 103 ersetzt. Hierbei bleibt nur der Teil der säulenförmigen Unterstützungsstruktur 101 erhalten, der die Verbindung zum Dentalobjekt 101 herstellt. Die Geometrie der Verbindung zwischen Dentalobjekt 100 und Unterstützungsstruktur 101 ist frei wählbar und braucht nicht vertikal ausgerichtet zu sein.

Um ein möglichst isotropes Verhalten zu gewährleisten, kann die generierte Gitterstruktur 103 entsprechend gewählt werden, wie beispielsweise mit einem gleichseitigen Dreieck, das gleichmäßig um die Unterstützungsstruktur 101 herum angeordnet ist. Dadurch kann eine statisch bestimmte Konstruktion erreicht werden, die den Prozesskräften bei minimalem Materialeinsatz bestmöglich standhält.

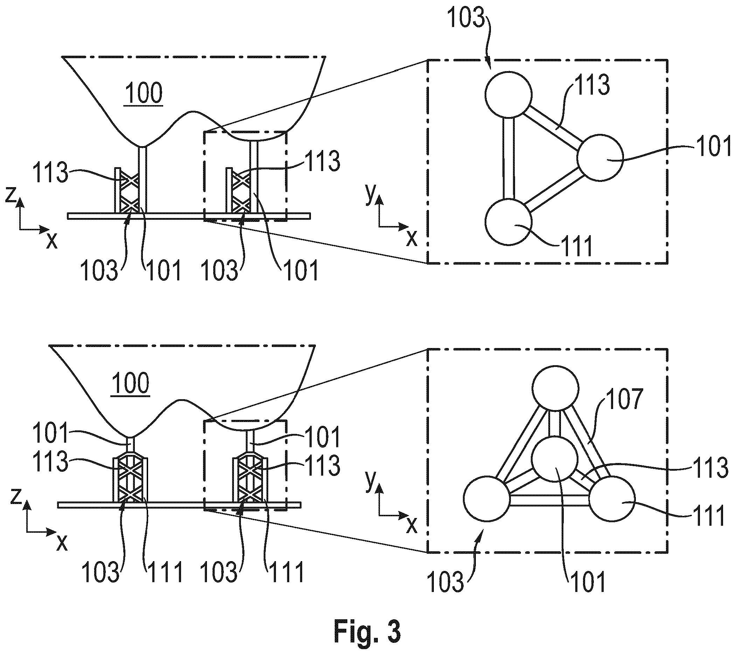

Fig. 3 zeigt eine weitere schematische Ansicht eines Aufbaus eines Dentalobjekts 100 mit säulenförmiger Unterstützungsstruktur 101, die durch eine Gitterstruktur 103 verstärkt ist.

Oben ist ein Ergänzungsaufbau gezeigt, bei dem die säulenförmige Unterstützungsstruktur 101 durch die Gitterstruktur 103 ergänzt wird. Links ist die Seitenansicht des Ergänzungsaufbaus und rechts eine Aufsicht auf den Ergänzungsaufbau gezeigt. Die säulenförmige Unterstützungsstruktur 101 wird in die Gitterstruktur 103 integriert. Dazu werden die vertikalen Streben 111 der Gitterstruktur 103 durch diagonale oder schräge Streben 113 mit der säulenförmigen Unterstützungsstruktur 101 verbunden.

Unten ist ein Ersetzungssaufbau gezeigt, bei dem die säulenförmige Unterstützungsstruktur 101 teilweise durch die Gitterstruktur 103 ersetzt wird. Links ist die Seitenansicht des Ersetzungsaufbaus und rechts eine Aufsicht auf den Ersetzungsaufbau gezeigt. Die vertikalen Streben 111 der Gitterstruktur 103 sind in einem gleichseiteigen Dreieck 107 um die säulenförmige Unterstützungsstruktur 101 herum angeordnet.

Die säulenförmige Unterstützungsstruktur 101 und die Gitterstruktur 103 werden in additiven Fertigungsverfahren erzeugt und sind somit auf einfache Weise in den Fertigungsprozess zu integrieren.

Eine digitale Implementierung der Unterstützungsstruktur 101 und der Gitterstruktur 103 kann in einem Software-System realisiert werden. Dieses Software-System kann wiederum in den Fertigungsprozess eingebunden werden, der wiederum in einem übergeordneten Prozess, wie einer Montage, eingeordnet sein kann. Da Maschinen zur additiven Fertigung beliebige valide Geometrieinformationen entgegennehmen können, sind keine speziellen baulichen Maßnahmen zur Integration in das Fertigungsverfahren erforderlich. Die Anpassungen für eine Prozessintegration beschränken sich lediglich auf das Software-System.

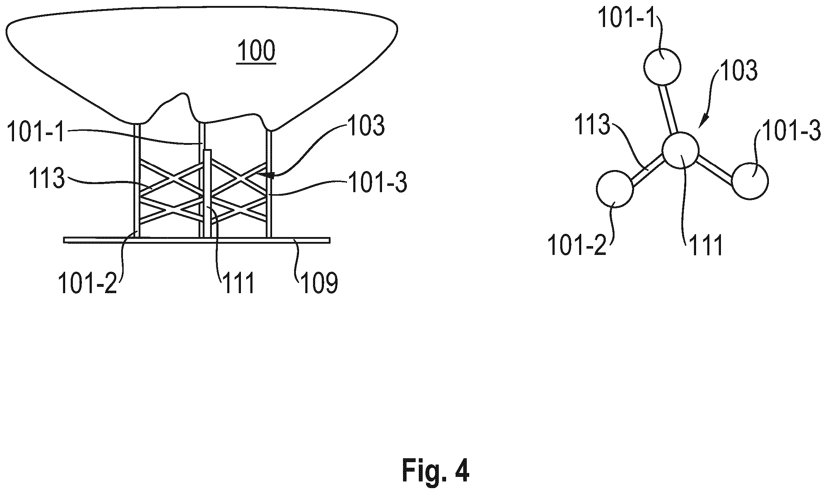

Fig. 4 zeigt eine weitere schematische Ansicht eines Aufbaus eines Dentalobjekts 100 mit säulenförmiger Unterstützungsstruktur 101, die durch eine Gitterstruktur 103 verstärkt ist. In dieser Ausführungsform wird die Gitterstruktur 103 zwischen zwei oder mehreren Unterstützungsstrukturen 101 durch vertikalen Streben 111 aufgebaut, von denen aus die Streben 113 zu den Unterstützungsstrukturen 101 gezogen werden, um das Fachwerk zu generieren.

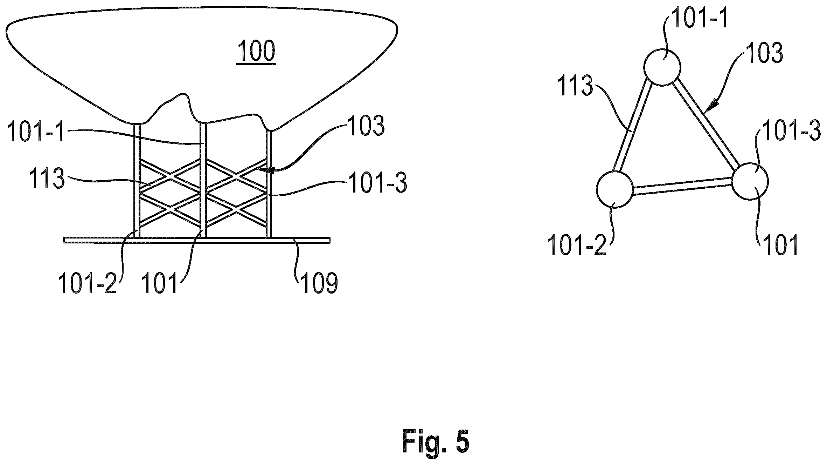

Fig. 5 zeigt eine weitere schematische Ansicht eines Aufbaus eines Dentalobjekts 100 mit säulenförmiger Unterstützungsstruktur 101, die durch eine Gitterstruktur 103 verstärkt ist. In dieser Ausführungsform wird die Gitterstruktur 103 lediglich durch Streben 113 zwischen mehreren Unterstützungsstrukturen 101 erzeugt.

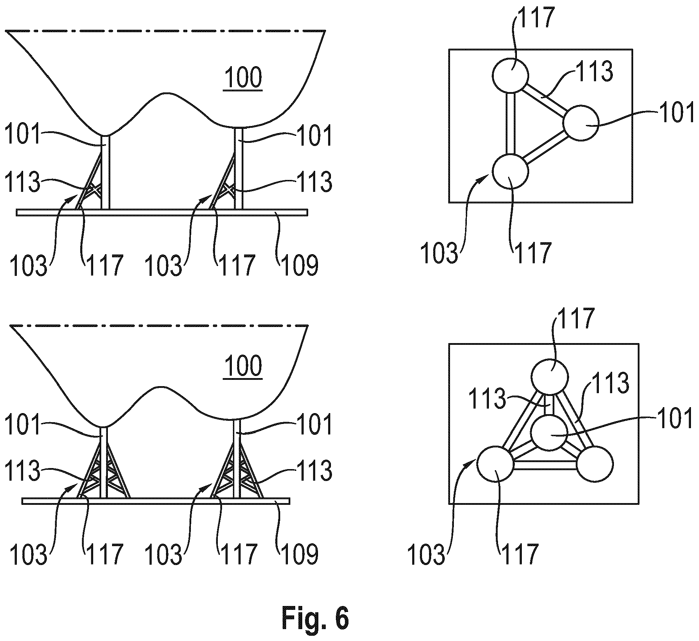

Fig. 6 zeigt eine weitere schematische Ansicht eines Aufbaus eines Dentalobjekts 101 mit säulenförmiger Unterstützungsstruktur 101, die durch eine Gitterstruktur 103 verstärkt ist. In dieser Ausführungsform werden zwei oder mehr schräge Streben 117 mit der Unterstützungsstruktur 101 verbunden, um die Gitterstruktur 103 zu erzeugen. Die schrägen Streben 117 laufen einen gemeinsamen Schnittpunkt zu.

Die schrägen Streben 117 sind ebenfalls mit quer verlaufenden schrägen Streben 113 untereinander und der Unterstützungsstruktur 101 verbunden. Die Gitterstruktur 103 weist eine polygonale oder pyramidale Form, die seitlich an der Unterstützungsstruktur 101 angeordnet ist oder um die Unterstützungsstruktur 101 herum angeordnet ist.

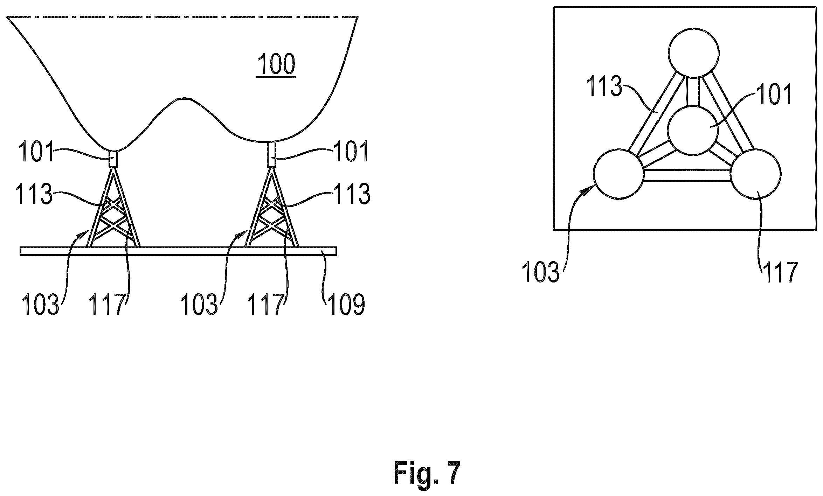

Fig. 7 zeigt eine weitere schematische Ansicht eines Aufbaus eines Dentalobjekts 100 mit säulenförmiger Unterstützungsstruktur 101, die durch eine Gitterstruktur 103 verstärkt ist. In dieser Ausführungsform werden mehrere schräge Streben 117 mit der Unterstützungsstruktur 101 verbunden, um die Gitterstruktur 103 zu erzeugen. Die schrägen Streben 117 sind ebenfalls mit quer verlaufenden schrägen Streben 113 untereinander und der Unterstützungsstruktur 101 verbunden. Die Gitterstruktur 103 weist eine polygonale oder pyramidale Form auf und ersetzt die Unterstützungsstruktur 101 teilweise.

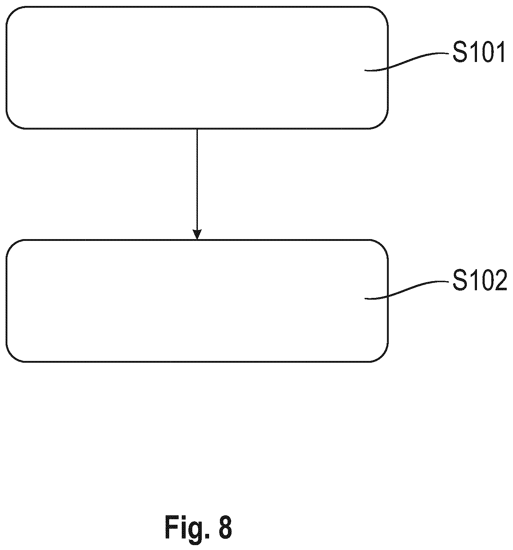

Fig. 8 zeigt ein Blockdiagramm eines Verfahrens zum Herstellen des Dentalobjekts 100. Das Verfahren umfasst den Schritt S101 eines Erzeugens der säulenförmigen Unterstützungsstruktur 101 an dem Dentalobjekt 100. Die säulenförmige Unterstützungsstruktur 101 wird in den Bereichen erzeugt, an denen der Abstand zwischen dem zu fertigenden Dentalobjekt 100 und der Bauplatte 109 am geringsten ist, d.h. ein lokales Minimum aufweist. Die Position des Minimums kann durch einen Algorithmus durch eine Analyse der dreidimensionalen Form des Dentalobjektes 100 erhalten werden. Zunächst werden hierzu alle lokalen Minima durch einen Algorithmus ermittelt.

Weitere säulenförmige Unterstützungsstrukturen 101 werden dann erzeugt, wenn der Verlauf der Oberflächenkontur des Dentalobjektes 100 im Bezug zu der Bauplattform 109 unterhalb eines vorgegebenen Winkels liegt, wie beispielsweise 45°. In diesem Fall werden die sich seitlich von dem Minimum ausbreitenden Flächen zusätzlich durch weitere säulenförmige Unterstützungsstrukturen 101 abgestützt. Liegt der Verlauf der Oberflächenkontur des Dentalobjektes 100 gegenüber der Bauplattform 109 oberhalb des vorgegebenen Winkels, brauchen keine zusätzlichen Unterstützungsstrukturen 101 hinzugefügt werden.

Dazu wird analysiert, welche Dreiecke zu der gleichen Überhangstruktur gehören. Als nächstes wird die Fläche der Dreiecke einer Überhangstruktur ermittelt. Falls diese eine vorgegebene Größe überschreitet, werden weitere säulenförmige Unterstützungsstrukturen 101 hinzugefügt, um die Überhangstruktur zu unterstützen.

Weiter umfasst das Verfahren den Schritt S102 eines Erzeugens einer Gitterstruktur 103 zum Verstärken der Unterstützungsstruktur 101. Die Gitterstruktur 103 ergänzt oder umgibt die Unterstützungsstruktur 101 oder ersetzt diese teilweise. Durch das Verfahren wird eine Stützstruktur erzeugt, die eine hohe Stabilität aufweist und mit einem geringen Materialeinsatz gefertigt werden kann.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Dentalobjekt
- 101: Unterstützungsstruktur
- 103: Gitterstruktur
- 105: frei hängende Geometrie
- 107: Dreieck
- 109: Bauplatte
- 111: vertikale Strebe
- 113: diagonale oder schräge Strebe
- 115: abgewinkelte Spitze
- 117: Strebe

## Patentansprüche

1. Verfahren zum Herstellen einer dentalen Restauration (100), mit den Schritten:
- Erzeugen (S101) einer säulenförmigen Unterstützungsstruktur (101) an der dentalen Restauration (100), die auf einer Bauplatte (109) angeordnet ist und sich von der Bauplatte (109) zur dentalen Restauration (100) hin erstreckt; und
- Erzeugen (S102) einer Gitterstruktur (103) zum Verstärken der Unterstützungsstruktur (101), die seitlich neben der Unterstützungsstruktur (101) angeordnet wird.

2. Verfahren nach Anspruch 1, wobei die Gitterstruktur (103) um die Unterstützungsstruktur (101) herum angeordnet wird.

3. Verfahren nach einem der vorangehenden Ansprüche, wobei die Unterstützungsstruktur (101) auf der Gitterstruktur (103) angeordnet wird.

4. Verfahren nach einem der vorangehenden Ansprüche, wobei die Gitterstruktur (103) durch zumindest eine Dreiecksstruktur, eine Viereckstruktur, eine Fünfeckstruktur und/oder eine Sechseckstruktur erzeugt wird.

5. Verfahren nach einem der vorangehenden Ansprüche, wobei die Unterstützungsstruktur (101) in die Gitterstruktur (103) integriert wird.

6. Verfahren nach einem der vorangehenden Ansprüche, wobei die Unterstützungsstruktur (101) zumindest teilweise durch die Gitterstruktur (103) ersetzt wird.

7. Verfahren nach einem der vorangehenden Ansprüche, wobei vertikale Streben (111) der Gitterstruktur (103) durch diagonale oder schräge Streben (113) verbunden werden oder diagonale oder schräge Streben (113,117) an oder zwischen der Unterstützungsstruktur (101) angeordnet sind.

8. Verfahren nach einem der vorangehenden Ansprüche, wobei die dentale Restauration (100), die Unterstützungsstruktur (101) und/oder die Gitterstruktur (103) mittels eines 3D-Druckverfahrens hergestellt werden.

9. Dentale Restauration (100), mit:
- einer säulenförmigen Unterstützungsstruktur (101) an der dentalen Restauration (100), die auf einer Bauplatte (109) angeordnet ist und sich von der Bauplatte (109) zur dentalen Restauration (100) hin erstreckt; und
- einer Gitterstruktur (103) zum Verstärken der Unterstützungsstruktur (101), die seitlich neben der Unterstützungsstruktur (101) angeordnet ist.

10. Dentale Restauration (100) nach Anspruch 9, wobei die Gitterstruktur (103) um die Unterstützungsstruktur herum (101) angeordnet ist.

11. Dentale Restauration (100) nach einem der Ansprüche 9 oder 10, wobei die Unterstützungsstruktur (101) auf der Gitterstruktur (103) angeordnet ist.

12. Dentale Restauration (100) nach einem der Ansprüche 9 bis 11, wobei die Gitterstruktur (103) zumindest eine Dreiecksstruktur, eine Viereckstruktur, eine Fünfeckstruktur und/oder eine Sechseckstruktur umfasst.

13. Computerprogramm umfassend Befehle, die bewirken, dass eine 3D-Druckvorrichtung die Verfahrensschritte nach einem der Ansprüche 1 bis 8 ausführt.

## Claims

1. A method of producing a dental restoration (100), comprising the steps of:
- producing (S101) a pillared support structure (101) on the dental restoration (100) which is arranged on a building panel (109) and extends from the building panel (109) to the dental restoration (100); and
- producing (S102) a lattice structure (103) for reinforcing the support structure (101) which is arranged laterally adjacent to the support structure (101).

2. The method according to claim 1, wherein the lattice structure (103) is arranged around the support structure (101).

3. The method according to any one of the preceding claims,
wherein the support structure (101) is arranged on the lattice structure (103).

4. The method according to any one of the preceding claims,
wherein the lattice structure (103) is produced by at least one of a triangular structure, a quadrangular structure, a pentagonal structure, and a hexagonal structure.

5. The method according to any one of the preceding claims,
wherein the support structure (101) is integrated into the lattice structure (103).

6. The method according to any one of the preceding claims,
wherein the support structure (101) is at least partially replaced by the lattice structure (103).

7. The method according to any one of the preceding claims,
wherein vertical struts (111) of the lattice structure (103) are connected by diagonal or oblique struts (113) or diagonal or oblique struts (113,117) are arranged on or between the support structure (101).

8. The method according to any one of the preceding claims,
wherein the dental restoration (100), the support structure (101) and/or the lattice structure (103) are produced by means of a 3D printing process.

9. A dental restoration (100), comprising:
- a pillared support structure (101) on the dental restoration (100) which is arranged on a building panel (109) and extends from the building panel (109) to the dental restoration (100); and
- a lattice structure (103) for reinforcing the support structure (101) which is arranged laterally adjacent to the support structure (101).

10. The dental restoration (100) according to claim 9, wherein the lattice structure (103) is arranged around the support structure (101).

11. The dental restoration (100) according to claim 9 or 10,
wherein the support structure (101) is arranged on the lattice structure (103).

12. The dental restoration (100) according to any one of claims 9 to 11, wherein the lattice structure (103) comprises at least one of a triangular structure, a quadrangular structure, a pentagonal structure, and a hexagonal structure.

13. A computer program comprising instructions that cause a 3D printing device to perform the method steps of any one of claims 1 to 8.

## Revendications

1. Procédé de réalisation d'une restauration dentaire (100), comprenant les étapes suivantes :
- création (S101) d'une structure de support (101) en forme de colonnes sur la restauration dentaire (100) qui est disposée sur une plaque de construction (109) et s'étend de la plaque de construction (109) à la restauration dentaire (100) ; et
- création (S102) d'une structure de grille (103) pour renforcer la structure de support (101), qui est disposée latéralement à côté de la structure de support (101).

2. Procédé selon la revendication 1, où la structure de grille (103) est disposée autour de la structure de support (101).

3. Procédé selon l'une des revendications précédentes, où la structure de support (101) est disposée sur la structure de grille (103).

4. Procédé selon l'une des revendications précédentes, où la structure de grille (103) est créée par au moins une structure triangulaire, une structure quadrilatérale, une structure pentagonale et/ou une structure hexagonale.

5. Procédé selon l'une des revendications précédentes, où la structure de support (101) est intégrée dans la structure de grille (103).

6. Procédé selon l'une des revendications précédentes, où la structure de support (101) est au moins partiellement remplacée par la structure de grille (103).

7. Procédé selon l'une des revendications précédentes, où des entretoises verticales (111) de la structure de grille (103) sont reliées par des entretoises diagonales ou obliques (113) ou des entretoises diagonales ou obliques (113, 117) sont disposées sur ou entre la structure de support (101).

8. Procédé selon l'une quelconque des revendications précédentes, où la restauration dentaire (100), la structure de support (101) et/ou la structure de grille (103) sont fabriquées au moyen d'un procédé d'impression 3D.

9. Restauration dentaire (100), avec :
- une structure de support en forme de colonnes (101) sur la restauration dentaire (100), qui est disposée sur une plaque de construction (109) et s'étend de la plaque de construction (109) à la restauration dentaire (100) ; et
- une structure de grille (103) pour renforcer la structure de support (101), qui est disposée latéralement à côté de la structure de support (101).

10. Restauration dentaire (100) selon la revendication 9, où la structure de grille (103) est disposée autour de la structure de support (101).

11. Restauration dentaire (100) selon l'une des revendications 9 ou 10, où la structure de support (101) est disposée sur la structure de grille (103).

12. Restauration dentaire (100) selon l'une des revendications 9 à 11, où la structure de grille (103) comprend au moins une structure triangulaire, une structure quadrilatérale, une structure pentagonale et/ou une structure hexagonale.

13. Programme d'ordinateur comprenant des commandes qui permettent à un dispositif d'impression 3D d'exécuter les étapes de procédé de l'une des revendications 1 à 8.
